Europäisches Patentamt
European Patent Office
Office européen des brevets

(19) (11) Veröffentlichungsnummer: **0 281 043 A2**

# (12) EUROPÄISCHE PATENTANMELDUNG

(21) Anmeldenummer: **88102948.2**

(22) Anmeldetag: **27.02.88**

(51) Int. Cl.[4]: **C08G 65/32** , D06M 15/53

(30) Priorität: **03.03.87 DE 3706784**

(43) Veröffentlichungstag der Anmeldung: **07.09.88 Patentblatt 88/36**

(84) Benannte Vertragsstaaten: **BE CH DE FR GB IT LI NL**

(71) Anmelder: **HOECHST AKTIENGESELLSCHAFT**
**Postfach 80 03 20**
**D-6230 Frankfurt am Main 80(DE)**

(72) Erfinder: **Kleiner, Hans-Jerg, Dr.**
**Altkönigstrasse 11a**
**D-6242 Kronberg/Taunus(DE)**
Erfinder: **Kleber, Rolf, Dr.**
**Am Trieb 41**
**D-6078 Neu-Isenburg(DE)**
Erfinder: **Jäckel, Lothar**
**Ketteler Strasse 88**
**D-6093 Flörsheim am Main(DE)**

## (54) Neue Alkanphosphonsäurehalbestersalze, ihre Herstellung und ihre Anwendung als Präparationsmittel für textile Fasern.

(57) Alkylphosphonsäurehalbestersalze der Formel

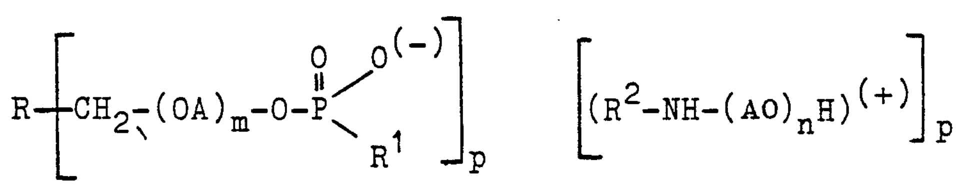

wobei R für den Fall p = 1 Alkyl und für den Fall p = 4 ein Kohlenstoffatom, $R^1$ $C_1$-$C_4$-Alkyl, A $C_2H_4$ und/oder $C_3H_7$, m eine Zahl von 15 bis 35, $R^2$ $C_6$-$C_{24}$-Alkyl, n eine Zahl von 0 bis 15 und p 1 oder 4 bedeuten. Diese Verbindungen eignen sich als Präparationsmittel für Textilfasern und zeichnen sich durch eine sehr gute Thermostabilität aus.

EP 0 281 043 A2

## Neue Alkanphosphonsäurehalbestersalze, ihre Herstellung und ihre Anwendung als Präparationsmittel für textile Fasern

Zu den Aufgaben eines Präparationsmittels zählt in erster Linie das Verleihen ausreichender Glätte beim Herstellen von Fasern sowie eine Reduzierung der statischen Aufladung. Bei modernen Verarbeitungstechnologien kommt es zu erheblichen thermischen Beanspruchungen der Präparation, so daß zusätzlich immer mehr die Thermostabilität von Präparationsmitteln in den Vordergrund rückt.

Das Präparieren von Fasern mit anionischen Verbindungen zwecks Reduzierung der statischen Aufladung ist gut bekannt. Phosphorsäureester, erhältlich durch Umsetzung von $P_2O_5$, Polyphosphorsäure oder $POCl_3$ mit Alkoholen, wie sie die US-PS 3.004.056 und 3.004.057 beschreibt, sind die bekanntesten Antistatika. Die dort beschriebenen Produkte weisen jedoch nur beschränkte Thermostabilität auf und enthalten meist anorganisches Phosphat, was erhebliche Reibungsprobleme mit sich bringt.

Die DT-PS 2.256.835 beschreibt thermostabile Halbester von Phosphonsäuren zum Präparieren von Synthesefasern. Die Produkte bereiten jedoch erhebliche Probleme in der Herstellung. Sie werden hergestellt durch radikalisch initiierte Umsetzung von langkettigen Olefinen mit Phosphiten. Dabei kann es zu Dimerisierungen des Olefins kommen und die nachfolgende Verseifung zum Phosphonhalbester ist eine nur schwer zu kontrollierende Reaktion.

Die EP-PS 0 029 172 beschreibt weiterhin thermostabile Halbester von Phosphonsäuren der Formel

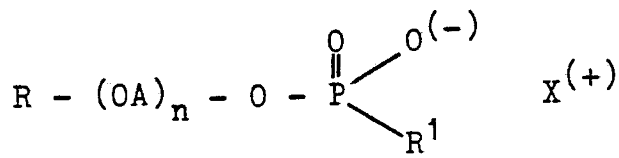

wobei R geradkettiges oder verzweigtes $C_6$-$C_{22}$, vorzugsweise $C_6$-$C_{16}$-Alkyl oder Alkenyl, $R^1$ $C_1$-$C_4$-Alkyl, A eine Gruppe der Formel $-CH_2-CH_2-$oder $-CH_2CHCH_3$, n eine Zahl von 1 bis 15, vorzugsweise 1 bis 8 und X ein Alkalimetall-oder Ammoniumion bedeutet. Diese Phosphonsäurehalbester sind gut geeignet als Präparationsmittel für textile Fasern. Ihre Thermostabilität ist aber für die Herstellung technischer Garne, bei der Temperaturen von mindestens 200°C bis 350°C erreicht werden können, nicht ausreichend.

In weiterer Ausgestaltung dieses Erfindungsgedankens wurde nun gefunden, daß Aminsalze spezieller Phosphonsäurehalbester die gewünschte hohe Thermostabilität aufweisen.

Gegenstand der Erfindung sind Alkanphosphonsäurehalbestersalze der Formel

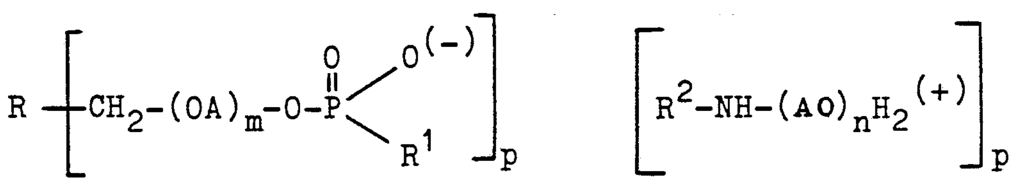

wobei R für den Fall p = 1 geradkettiges oder verzweigtes $C_1$-$C_7$-, vorzugsweise $C_3$-$C_4$-Alkyl und für den Fall p = 4 ein Kohlenstoffatom, $R^1$ $C_1$-$C_4$-Alkyl, A $C_2H_4$ und/oder $C_3H_7$, m eine Zahl von 15 bis 35, vorzugsweise 20 bis 30, $R^2$ geradkettiges oder verzweigtes $C_6$-$C_{24}$-, vorzugsweise $C_{16}$-$C_{20}$-Alkyl, n eine Zahl von 0 bis 15, vorzugsweise von 1 bis 8 und p 1 oder 4 bedeuten.

Gegenstand der Erfindung ist weiterhin die Herstellung und die Verwendung von Alkanphosphonsäurehalbestersalzen der obigen Formel als Präparationsmittel.

Diese Alkanphosphonsäure-halbestersalze sind aus den entsprechenden Phosphonsäureanhydriden präparativ leicht zugänglich, indem man diese Anhydride der Formel $(R^1\text{-}PO_2)_X$ mit äquimolaren Mengen eines Oxalkylats eines Alkohols umsetzt (vgl. Houben-Weyl Bd. XIII/1 S. 413). Die oxalkylierten Alkohole können entweder nur mit Äthylenoxid oder Propylenoxid oder aber mit einem Gemisch beider Alkylenoxide oxalkyliert sein. Dementsprechend erhält man dann Produkte der obigen Formel, die gleichzeitig Äthylenoxid-und Propylenoxidgruppen enthalten. Die Reaktionstemperatur für die Alkoholyse der Phosphonsäureanhydride liegt vorzugsweise bei 30 - 120°C, insbesondere 80 - 100°C, und als Lösungsmittel verwendet man indifferente Verbindungen wie aliphatische oder aromatische Kohlenwasserstoffe, Halogenkohlenwasserstoffe, oder höhere Ether. Man kann jedoch auch ohne Verwendung von Lösungsmitteln arbeiten. Bei Verwendung eines Lösungsmittels können die Ester durch Abdestillieren des Lösungsmittels

gewonnen werden. Die als Ausgangsverbindungen dienenden Alkanphosphonsäureanhydride sind auf verschiedenen Wegen leicht zugänglich (vgl. Houben-Weyl, Methoden der org. Chem., Georg Thieme Verlag, Stuttgart, Bd. XII/1 S. 612, (1963), DE-OS 27 58 580, DE-OS 24 41 878). Die nach dem Verfahren der DE-OS 27 58 580 in technischer Qualität anfallenden Anhydride sind dabei ebenfalls verwendbar und bevorzugt. Zur Herstellung der Salze werden die Alkanphosphonsäurehalbester vorzugsweise in Substanz mit den entsprechenden Aminen versetzt. Als derartige Amine kommen die längerkettigen Amine wie z.B. Octadecylamin in Frage. Insbesondere die oxethylierten längerkettigen Amine wie z.B. Stearylamin mit 8 Mol Ethylenoxid sind zur Herstellung der erfindungsgemäßen Aminsalze geeignet. Gegebenenfalls kann als Verdünnungsmittel auch Wasser zugesetzt werden. Es werden häufig überstöchiometrische Mengen der Amine eingesetzt, z.B. auf ein Mol Halbester ca. 2 Mol Amin. Die Menge des eingesetzten Amins richtet sich nach dem pH-Gehalt einer 1%igen wäßrigen Lösung des Gemisches Amin/Aminsalz des Halbesters, der ca. 5,5 bis 6,5 betragen soll.

Die Alkanphosphonsäure-halbestersalze sind hoch thermostabil und zeigen ausgeprägte Gleiteigenschaften sowie eine hohe Antistatik. Sie eignen sich deshalb gut als Präparationsmittel für textile, insbesondere technische Fasern auf Basis Polyester, Polyamid aber auch Aramide, und Polyacrylnitril. Weiterhin können keramische Fasern in Frage kommen. Die Produkte können allein oder auch in Kombination mit anderen Präparationsmitteln, wie z.B. Ester-oder Mineralölen, Fadenschlußmitteln, oxethylierten Alkoholen oder Fettsäuren, Emulgatoren, Silikonölen etc. eingesetzt werden. Die Auflage der Alkanphosphonestersalze liegt bei 0,02 - 2 Gew.-%, vorzugsweise bei 0,1 - 1,0 Gew.-% an wirksamer Substanz. Die Produkte können auf Endlosfäden oder Stapelfasern, auf Kabeln und Füllfasern aus Polyester, Polyamid, Polyacrylnitril, Polyolefinen sowie nativen und Regeneratcellulosefasern, Wolle oder Baumwolle beim Herstellen und in der textilen Weiterverarbeitung (Sekundärspinnereien) aufgebracht werden. Appliziert nach Färbevorgängen verleihen sie den ausgerüsteten Fäden oder Fasern gute Gleiteigenschaften, verbunden mit hoher antistatischer Wirksamkeit.

**Beispiel 1**

500 g, ca. 0,4 Mol, Polyglykol B 11/50 (Umsetzungsprodukt von Butanol mit Ethylenoxid/Propylenoxid im Verhältnis 1:1 mit einem Molgewicht von ca. 1200) wurden unter Rühren auf 100°C erwärmt. Nun wurden in 2 bis 3 Stunden 88,4 g (0,417 Mol) Propanphosphonsäureanhydridlösung 50 %ig in Dichlormethan zugetropft. Weitere 4 Stunden wurde nachgerührt. Dann wurde auf Raumtemperatur abgekühlt und ein Vakuum von 0,67 kPa angelegt. Dann wurde langsam die Temperatur auf 100°C gesteigert. In einer nachgeschalteten Kühlfalle sammelte sich das Dichlormethan. Nach Abkühlung wurden unter Rühren während 2 Stunden 544 g (ca. 0,892 Mol) eines Umsetzungsproduktes von Stearylamin mit 8 Mol Ethylenoxid eingetropft. Es wurden nach beendeter Umsetzung 1088,4 g Endprodukt erhalten.

**Beispiel 2**

500 g (ca. 0,42 Mol) Polyglykol B 11/50 (Umsetzungsprodukt von Butanol mit Ethylenoxid/Propylenoxid im Verhältnis 1:1 mit einem Molgewicht von ca. 1200) wurden unter Rühren auf 100°C erwärmt. Nun wurden in 2 bis 3 Stunden 88,4 g (0,417 Mol) Propanphosphonsäureanhydridlösung 50 %ig in Dichlormethan zugetropft. Weitere 9 Stunden wurde nachgerührt. Dann wurde auf Raumtemperatur abgekühlt und ein Vakuum von 0,67 kPa angelegt. Dann wurde langsam die Temperatur auf 100°C gesteigert. In einer nachgeschalteten Kühlfalle sammelte sich das Dichlormethan. Nach Abkühlung wurden unter Rühren bei 30 bis 40°C 113 g (0,42 Mol) Octadecylamin eingetragen. Mehrere Stunden wurde nachgerührt. Es wurden nach beendeter Umsetzung 657 g Endprodukt erhalten.

**Beispiel 3**

522 g (ca. 0,105 Mol) Polyglykol P 41/300 (Umsetzungsprodukt von Pentaerythrit mit Ethylenoxid/Propylenoxid im Verhältnis 4:1 mit einem Molgewicht von ca. 5000) wurden unter Rühren auf 100°C erwärmt. Nun wurden in 2 Stunden 85 g (0,417 Mol) Propanphosphonsäureanhydridlösung 52 %ig in

Dichlormethan zugetropft. Weitere 2 Stunden wurde nachgerührt. Dann wurde ein Vakuum von 0,67 kPa angelegt. In einer nachgeschalteten Kühlfalle sammelte sich das Dichlormethan. Nach Abkühlung wurden unter Rühren 544 g (ca. 0,892 Mol) eines Umsetzungsproduktes von Stearylamin mit 8 Mol Ethylenoxid eingetropft. Nach beendeter Umsetzung wurden 1110 g Endprodukt erhalten.

**Beispiel 4**

Thermostabilität:

1 g Produkt (wirksamer Substanzgehalt) wird jeweils 20 Minuten, 1 Stunde und 2 Stunden auf 220°C erhitzt und der Verlust durch Verdampfen gravimetrisch bestimmt.

a) Kaliumsalz des Propanphosphonsäuremono-2-ethylhexylesters (Beispiel 1 der EP-PS 00 29 172)
b) Beispiel 1 erfindungsgemäß
c) Beispiel 3 erfindungsgemäß

| | 20 Min. | 1 Std. | 2 Stdn. |
|---|---|---|---|
| | Verlust | Verlust | Verlust |
| a) Vergleich | 5 % | 12 % | 23 % |
| b) | 1 % | 4,8 % | 10,2 % |
| c) | 1 % | 4,0 % | 8,5 % |

Die übrigen Werte der Produkte der Beispiele b) und c) im Hinblick auf ihre Gleiteigenschaft (dynamische und statische Reibung) und ihre antistatische Wirksamkeit sind für die Verarbeitung bei technischen Garnen einwandfrei.

**Ansprüche**

1. Alkylphosphonsäurehalbestersalze der Formel

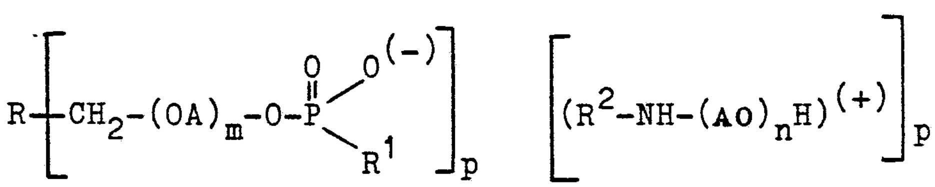

wobei R für den Fall p = 1 geradkettiges oder verzweigtes $C_1$-$C_7$, vorzugsweise $C_3$-$C_4$-Alkyl und für den Fall p = 4 ein Kohlenstoffatom, $R^1$ $C_1$-$C_4$-Alkyl, A $C_2H_4$ und/oder $C_3H_7$, m eine Zahl von 15 bis 35, vorzugsweise 20 bis 30, $R^2$ geradkettiges oder verzweigtes $C_6$-$C_{24}$-, vorzugsweise $C_{16}$-$C_{20}$-Alkyl, n eine Zahl von 0 bis 15, vorzugsweise von 1 bis 8 und p 1 oder 4 bedeuten.

2. Verfahren zur Herstellung der Alkanphosphonsäurehalbestersalze nach Anspruch 1, dadurch gekennzeichnet, daß man ein Phosphonsäureanhydrid der Formel $(R^1\text{-}PO_2)_x$ mit einem Alkohol der Formel
$R\text{-}CH_2\text{-}(OA)_m\text{-}OH$ bzw. $C[CH_2\text{-}(OA)_m\text{-}OH]_4$
umsetzt und den erhaltenen Alkanphosphonsäurehalbester mit einem Amin der Formel $R^2\text{-}NH\text{-}(AO)_n\text{-}H$ umsetzt.

3. Verwendung der Alkanphosponsäurehalbestersalze nach Anspruch 1 als Präparationsmittel für textile Fasern.